# EUROPEAN PATENT APPLICATION

(11) **EP 3 783 247 A1**
(43) Date of publication of application: **24.02.2021**
(21) Application number: 19787589.1
(22) Date of filing: 11.04.2019
(51) Int. Cl.: F16H 55/06, C08J 5/08, F16H 55/22

(54) **SLIDING COMPONENT**

(30) Priority: 16.04.2018 JP 2018078502
(71) Applicant: JTEKT CORPORATION, Chuo-ku, Osaka-shi, Osaka 542-8502 (JP)
(72) Inventor: NAGAI, Yasuharu, Osaka-shi, Osaka 542-8502 (JP); NAGAI, Setsuo, Osaka-shi, Osaka 542-8502 (JP); KUNISHIMA, Takeshi, Osaka-shi, Osaka 542-8502 (JP); MACHIDA, Seiichi, Osaka-shi, Osaka 542-8502 (JP)
(74) Representative: Winter, Brandl, Fürniss, Hübner, Röss, Kaiser, Polte - Partnerschaft mbB
(86) International application number: PCT/JP2019/015749
(87) International publication number: WO 2019/203108

(57) **Abstract**

A sliding member includes a first sliding member having a resin portion on its outer surface and a second sliding member having a metal portion that slides relative to the resin portion, wherein the resin portion of the first sliding member includes a resin containing a reinforcing filler and having a viscosity number VN of 180 ml/g or more, and the reinforcing filler has a hardness higher than that of the metal portion of the second sliding member. In the sliding component, preferably, the reinforcing filler has a Vickers hardness of 300 HV to 800 HV, and the metal portion has a Vickers hardness of 250 HV to 600 HV.

## Description

### Technical Field

The present invention relates to a sliding component.

### Background Art

Patent Literature 1 discloses a rolling bearing for a sliding door including an inner ring, an outer ring, balls serving as rolling elements disposed between both raceway surfaces of the inner ring and the outer ring, a cage for equally placing the balls in a circumferential direction and holding the balls so as to be rollable, a pair of seals fixed at both ends of the outer ring, and a resin portion disposed so as to cover an outer circumferential portion and an end surface portion of the outer ring. The resin portion is composed of, for example, a resin composition obtained by mixing glass fiber as a reinforcing material into polyamide 66.

Patent Literature 2 discloses a gear for an electric power steering device molded of a polyamide resin composition containing 30 to 90% by weight of polyamide 66 having a number average molecular weight in a range of 22000 to 40000 and 10 to 70% by weight of a glass fiber having an average fiber diameter of 9.1 µm or more.

### Citation List

### Patent Literatures

Patent Literature 1: Japanese Unexamined Patent Application Publication No. 2007-315483
Patent Literature 2: Japanese Unexamined Patent Application Publication No. 2013-155788

### Summary of Invention

### Technical Problem

When a resin contains a reinforcing fiber such as a glass fiber as in the rolling bearing described in Patent Literature 1, for example, there is a possibility that the reinforcing fiber drops out from the resin due to sliding and acts like an abrasive to cause fatigue and peeling of the resin. Further, there is also a possibility that the reinforcing fiber that has dropped out attacks a mating metal material (for example, a sliding door guide rail, a metal worm shaft of an electric power steering (EPS) speed reducer, etc.) and the wear of the resin is accelerated due to mixing of the abrasion powder, which leads to early damage.

Accordingly, an object of the present invention is to provide a sliding component capable of reducing the wear of the resin portion as compared with the conventional case.

### Solution to Problem

A sliding component (19) of the present invention includes a first sliding member (21) having a resin portion (31) on its outer surface and a second sliding member (20) having a metal portion (20) that slides relative to the resin portion (31). The resin portion (31) of the first sliding member (21) includes a resin containing reinforcing filler (63) and having a viscosity (47) number VN of 180 ml/g or more. The reinforcing filler (63) has a hardness higher than that of the metal portion (20) of the second sliding member (20) (claim 1).

According to this configuration, the viscosity number VN of the resin portion of the first sliding member is 180 ml/g or more, and the reinforcing filler has a hardness higher than that of the metal portion of the second sliding member. Thus, excellent wear resistance that has not been conventionally achieved can be exhibited. Further, since the reinforcing filler is contained in the resin portion, creep resistance can be improved as compared with a case in which a resin containing no filler, etc., is used.

In the sliding component (19) of the present invention, the reinforcing filler (63) may have a Vickers hardness of 300 HV to 800 HV, and the metal portion (20) may have a Vickers hardness of 250 HV to 600 HV (claim 2).

According to this configuration, the amount of wear of the resin portion of the first sliding member can be reduced and the amount of wear of the metal portion of the second sliding member can also be reduced.

In the sliding component (19) of the present invention, the resin portion (31) of the first sliding member (21) may have a viscosity number VN of 230 ml/g to 400 ml/g (claim 3).

When the viscosity number VN of the resin portion of the first sliding member is within the above range, the amount of wear of the resin portion can be effectively reduced.

In the sliding component (19) of the present invention, the resin portion (31) of the first sliding member (21) and the metal portion (20) of the second sliding member (20) may include gears engaged with each other (claim 4).

In the sliding component (19) of the present invention, the first sliding member (21) may include a worm wheel (21) having the resin portion in which a tooth portion (31) is formed, and the second sliding member (20) may include a worm (20) engaged with the tooth portion of the worm wheel (21) (claim 5).

In the sliding component (19) of the present invention, the reinforcing filler (63) may contain a reinforcing fiber (63) (claim 6).

In the sliding component (19) of the present invention, the reinforcing fiber (63) may be a glass fiber (claim 7).

According to this configuration, when the resin portion of the first sliding member and the metal portion of the second sliding member are gears that are engaged with each other, both the wear resistance and the creep resistance of the resin portion can be realized, and excellent toughness can also be exhibited.

In the sliding component (19) of the present invention, the reinforcing fiber (63) may be a carbon fiber (claim 8).

In the above description, the numerals in parentheses represent reference signs of corresponding components in a preferred embodiment described later. However, it is not intended to limit the scope of the claims by these reference signs.

### Brief Description of Drawings

FIG. 1 is a schematic diagram of a steering device.
FIG. 2 is a side view of a main part in a worm speed reducer provided to the steering device.
FIG. 3 is a diagram for explaining a step related to preparation of a raw material resin for a worm wheel.
FIG. 4 is a diagram for explaining a step related to molding and annealing treatment of the worm wheel.
FIG. 5 is a graph showing the amount of height reduction of the resins of Examples and Comparative Examples.
FIG. 6 is a graph showing the relationship between the viscosity number VN of the molded body and the amount of wear of the resin.
FIG. 7 is a graph showing the relationship between the viscosity number VN of the molded body and the amount of wear of the metal.
FIG. 8 is a graph showing the relationship between the amount of wear of the resin and the amount of wear of the metal.
FIG. 9 is a graph showing the relationship between the hardness of the metal and the amount of height reduction of the resin.
FIG. 10 is a graph showing the relationship between the hardness of the metal and the amount of wear of the metal.
FIG. 11 is a graph showing evaluation results of the long-term durability life of Examples and Comparative Examples.
FIG. 12 is a graph showing evaluation results of roller type tests (wear resistance).
FIG. 13 is a graph showing evaluation results of the tensile elongation at break.
FIG. 14 is a graph showing evaluation results of the tensile energy to break.
FIG. 15 is a graph showing the relationship between the hardness of the metal and the amount of height reduction of the resin.
FIG. 16 is a graph showing the relationship between the hardness of the metal and the amount of height reduction of the resin.
FIG. 17 is a graph showing the relationship between the hardness of the metal and the amount of wear of the metal.
FIG. 18 is a graph showing the relationship between the viscosity number VN of the molded body and the amount of height reduction of the resin.

### Description of Embodiments

Hereinafter, a preferred embodiment of the present invention will be described in detail with reference to the accompanying drawings.

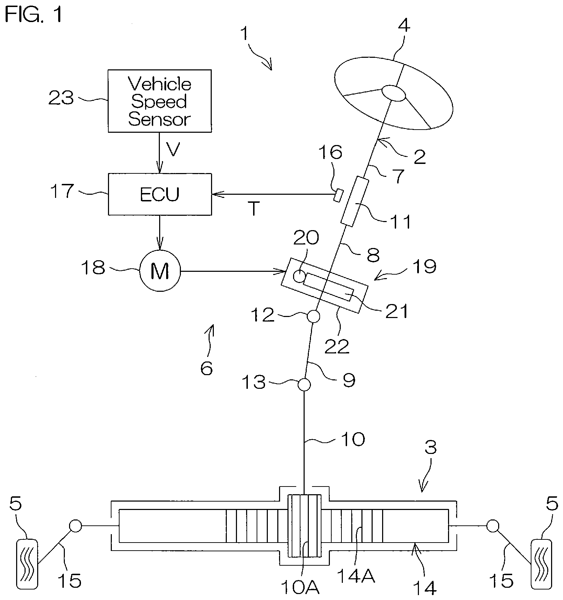

FIG. 1 is a schematic diagram of a steering device 1. Referring to FIG. 1, the steering device 1 is an electric power steering device, includes a steering mechanism 2 and a turning mechanism 3, and turns turning wheels 5 based on steering (steering operation) of a steering wheel 4 (steering member) by a driver. The steering mechanism 2 includes an assist mechanism 6 assisting the steering operation by the driver.

The steering mechanism 2 has an input shaft 7, an output shaft 8, an intermediate shaft 9, and a pinion shaft 10. The input shaft 7 is connected to the steering wheel 4. In the output shaft 8, one end is connected to the input shaft 7 through a torsion bar 11 and the other end is connected to the intermediate shaft 9 through a universal joint 12. The intermediate shaft 9 is connected to the pinion shaft 10 having a pinion 10A through a universal joint 13.

The turning mechanism 3 has a rack shaft 14 and tie rods 15. The rack shaft 14 has a rack 14A engaged with the pinion 10A. The tie rods 15 have one end connected to the rack shaft 14 and the other end connected to the turning wheel 5.

Upon rotation of the steering wheel 4 in response to the operation of the steering wheel 4 by the driver, the pinion shaft 10 is rotated through the input shaft 7, the output shaft 8, and the intermediate shaft 9. The rotation of the pinion shaft 10 is converted into reciprocation in an axial direction of the rack shaft 14 by the turning mechanism 3. The turning angle of the turning wheels 5 is changed by the reciprocation in the axial direction of the rack shaft 14.

The assist mechanism 6 includes a torque sensor 16, an ECU (Electronic Control Unit) 17, an electric motor 18 for auxiliary steering, and a worm speed reducer 19 as an example of the sliding component of the present invention.

The worm speed reducer 19 includes a worm 20 as an example of the second sliding member of the present invention, a worm wheel 21 as an example of the first sliding member of the present invention, which is a reduction gear engaged with the worm 20, and a housing 22 for housing the worm 20 and the worm wheel 21. The worm 20 is connected to a rotary shaft (not shown) of the electric motor 18. The worm wheel 21 is integrally rotatably connected to the output shaft 8.

Upon rotation of the steering wheel 4 along with the steering by the driver, the torque sensor 16 detects an amount of twist between the input shaft 7 and the output shaft 8. The ECU 17 determines an assist torque based on a steering torque T obtained from the amount of twist having been detected by the torque sensor 16, a vehicle speed V having been detected by a vehicle speed sensor 23, etc. The electric motor 18 is driven and controlled by the ECU 17. The electric motor 18 thus driven based on the steering of the steering wheel 4 transmits the output rotation to the worm 20 to rotate the worm 20. The worm wheel 21 engaged with the worm 20 then rotates at a speed lower than the worm 20, and the worm wheel 21 and the output shaft 8 rotate integrally. In this manner, the worm speed reducer 19 decelerates the output rotation of the electric motor 18 by the worm wheel 21 and transmits it as an assist torque to the output shaft 8 of the steering mechanism 2. As a result, the steering operation of the steering wheel 4 by the driver is assisted.

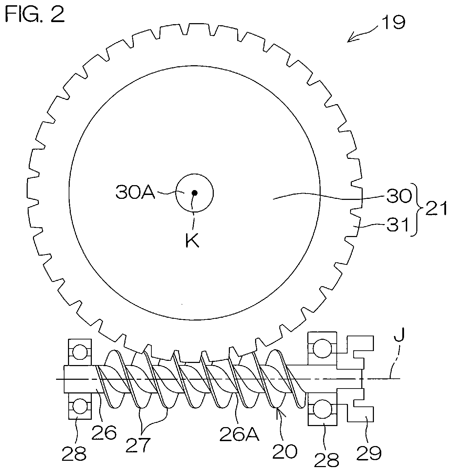

Next, the worm speed reducer 19 will be described in detail. FIG. 2 is a side view of a main part in the worm speed reducer 19.

In FIG. 2, illustration of the aforementioned housing 22 is omitted. Referring to FIG. 2, the worm 20 is made of metal and includes a cylindrical shaft portion 26 and a tooth 27 integrally formed on an outer circumferential surface 26A of the shaft portion 26.

As the metal material constituting the worm 20, carbon steel such as, for example, S25C, S43C, S45C, and S55C, and alloy steel such as, for example, SUJ2, SCM435, and SCM440 can be applied. The hardness of the worm 20 may be, for example, a Vickers hardness measured in accordance with JIS Z 2244 (2009) of 250 HV to 600 HV, and preferably 250 HV to 450 HV. The hardness of the worm 20 can be adjusted to a desired value by, for example, omitting heat treatment (quenching, tempering, etc.) or adjusting the temperature and time of the heat treatment after tooth forming processing is performed on the worm 20 by rolling or grinding a raw material or a metal member having been subjected to heat treatment (quenching, tempering, etc.). The worm 20 does not have to be the metal portion in its entirety as in this preferred embodiment and may be such that a sliding part engaged with the tooth portion 31 of the worm wheel 21 is selectively composed of metal.

The tooth 27 is formed at an area inner than both end portions in an axial direction X on the outer circumferential surface 26A in such a manner as to draw a spiral around a central axis J. The tooth 27 when viewed from a direction in which the central axis J extends has a circular contour with the central axis J as the center of the circle.

A bearing 28 is attached to each end portion of the shaft portion 26 in the direction in which the central axis J extends. The worm 20 is rotatably supported by the housing 22 through the bearings 28. A joint 29 is attached to a part protruding from the bearing 28 at one end portion (the right end portion in FIG. 2) in that direction. The joint 29 is connected to the rotary shaft (not shown) of the electric motor 18. Therefore, as described above, the worm 20 rotates around the central axis J when the electric motor 18 is driven.

The worm wheel 21 has a disc shape. The worm wheel 21 has its central axis K extending in an axial direction Y coinciding with a thickness direction of the worm wheel 21.

The worm wheel 21 includes a disc-shaped sleeve 30 located on the central axis K side and an annular tooth portion 31 surrounding the sleeve 30 on an outer circumferential side that is radially away outward from the central axis K. For example, a resin tooth portion 31 may be integrated into a metal sleeve 30 by insert molding. More specifically, the tooth portion 31 may include a resin containing a reinforcing fiber, which is obtained by a manufacturing method described later. An insertion hole 30A into which the output shaft 8 is fitted is formed at a circle center position of the sleeve 30.

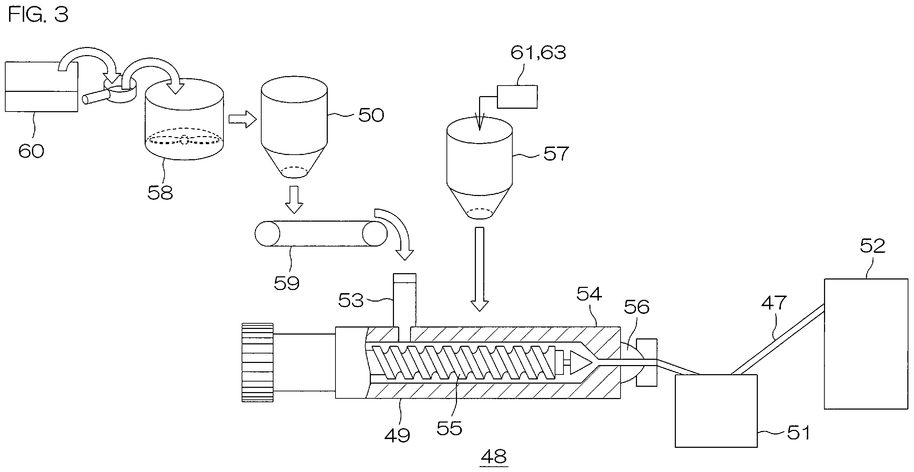

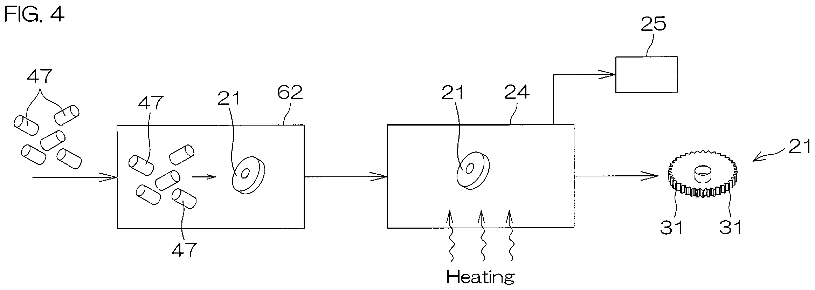

Next, a method of manufacturing the worm wheel 21 will be described. FIG. 3 is a diagram for explaining a step related to preparation of a raw material resin 47. FIG. 4 is a diagram for explaining a step related to molding and annealing treatment of the worm wheel 21.

First, in this preferred embodiment, the tooth portion 31 (resin portion) of the worm wheel 21 is formed of a resin containing a reinforcing fiber and having a viscosity number VN of 180 ml/g or more (preferably, 230 ml/g to 400 ml/g) . Accordingly, for example, the following two techniques may be adopted. The viscosity number VN of the resin portion is, for example, the viscosity number VN measured in accordance with ISO307. More specifically, a raw material resin solution is obtained by dissolving the raw material resin 47 into a solvent such as formic acid, sulfuric acid, or cresol so as to reach a concentration c of 0.005 g/ml. A relative viscosity ηᵣₑₗ is then calculated from a kinematic viscosity ratio between the viscosity of the raw material resin solution and the viscosity of only the solvent (the ratio of fall time in a marked line tube in a micro Ubbelohde tube). After that, the viscosity number VN can be calculated from the ratio between the concentration c and the relative viscosity ηᵣₑₗ.

The first technique uses a high molecular weight resin having a relatively high viscosity number VN as a base resin of the raw material resin 47 for the tooth portion 31 of the worm wheel 21. The viscosity number VN of the base resin is, for example, 200 ml/g or more, and the number average molecular weight Mn is, for example, 30000 to 60000. As the type of the resin, a polyamide resin can be used, for example. Specific commercially available products satisfying the above characteristics include, for example, LEONA 1502S and LEONA 1702 manufactured by Asahi Kasei Corporation, for example, Zytel E45, Zytel E50, Zytel E51HSBNC010, and Zytel E53 manufactured by DuPont de Nemours, Inc., and, for example, A5H manufactured by BASF SE.

The second technique, for example, uses a polyamide resin as the base resin of the raw material resin 47 for the tooth portion 31 of the worm wheel 21 and kneads an additive having reactivity with a functional group in the polyamide resin together with the reinforcing fiber so as to have a pseudo high molecular weight (crosslinking). Alternatively, at the time of molding after the kneading, the additive and the polyamide resin are caused to react so as to have a pseudo high molecular weight (crosslinking). As a result, the polyamide resin can be made to have a high molecular weight, and the worm wheel 21 including the resin portion (tooth portion 31) having the viscosity number VN satisfying the foregoing conditions can be obtained.

In the foregoing first and second techniques, for example, the worm wheel 21 may be subjected to heat treatment under reduced pressure or in an inert gas atmosphere after the raw material resin 47 is prepared and the worm wheel 21 is molded. As a result, a dense crosslinked structure can be formed in the resin portion, and the viscosity number and the degree of crystallinity can be further increased.

Hereinafter, processes of the foregoing first and second techniques will be described more specifically.

First, the raw material resin 47 constituting the worm wheel 21 is prepared. For the preparation of the raw material resin 47, a kneader 48 shown in FIG. 3 is used, for example.

The kneader 48 mainly includes, for example, a main body 49, a tank 50, a cooling water tank 51, and a pelletizer 52.

The main body 49 includes a main feeder 53, a cylinder 54, a screw 55, and a nozzle 56, and a side feeder 57 is installed between the main feeder 53 and the nozzle 56 (on the downstream side of the main feeder 53). The main body 49 is not particularly limited, and a publicly known kneader such as a twin screw (multi-screw) extruder or a single screw extruder can be used.

A stirrer 58 is provided upstream of the tank 50. The raw material having been mixed by the stirrer 58 is supplied to the main feeder 53 of the main body 49 through the tank 50 and a belt type weight scale 59 on the downstream side of the tank 50.

In order to prepare the raw material resin 47, first, a polyamide resin 60 and an optional additive are supplied to the cylinder 54 through the main feeder 53 serving as a common feeding point. The polyamide resin 60 and the optional additive may each be fed into the tank 50 to be supplied alone or may be supplied after being mixed (dry blended or masterbatched) by the stirrer 58.

Examples of the polyamide resin 60 include aliphatic polyamides (PA6, PA66, PA46, PA410, PA12, PA612, PA610, PA11, etc.), aromatic polyamides (PA6T, PA9T, PA10T, PA6T/X, PAMXD6, PPA), etc. Of these, preferably, aliphatic polyamides are used, and more preferably, polyamide 66 (PA66) is used. They can be used alone or in combination of two or more kinds. The number average molecular weight Mn of the polyamide resin used may be, for example, 30,000 to 60,000 when the foregoing first technique is adopted, and the viscosity number VN may be, for example, 200 ml/g to 400 ml/g. On the other hand, when the second technique is adopted, the number average molecular weight Mn of the polyamide resin used may be, for example, 18,000 to 40,000 and the viscosity number VN may be, for example, 110 ml/g to 280 ml/g. The base resin fed into the main feeder 53 may include, for example, a thermoplastic elastomer (acid-modified ethylene-based elastomer, EGMA, EPDM, polyamide elastomer, etc.) in addition to the polyamide resin 60. By blending the thermoplastic elastomer, impact resistance can be improved.

The blending ratio of the polyamide resin 60 may be, for example, 10% by mass to 95% by mass with respect to the total amount of materials used for the preparation of the raw material resin 47 when the foregoing first technique is adopted. When the second technique is adopted, the blending ratio may be 55% by mass to 95% by mass with respect to the same total amount.

Further, a lubricant may be preferably blended as the optional additive. Since a sliding effect between molecules of the raw material resin 47 can be obtained by the lubricant, molding can be performed at a relatively low temperature even if the molecular weight of the raw material resin 47 is high. Accordingly, thermal decomposition of the resin at the time of molding can be suppressed, and molding can be performed while maintaining the molecular weight of the raw material resin 47 high, so that the mechanical strength and wear resistance of the raw material resin 47 may be favorably maintained.

The lubricant is not particularly limited. For example, a publicly known lubricant such as metal soaps such as metal stearate, hydrocarbons such as paraffin wax and synthetic polyethylene wax, fatty acids such as stearic acid, higher alcohols such as stearyl alcohol, aliphatic amides such as stearic acid amide and oleic amide, esters such as alcohol fatty acid ester, and a silicone-based compound can be used. Of these, preferably, metal soaps are used, and more specifically, metal stearate is used. The blending ratio when the lubricant is blended may be, for example, 0.01% by mass to 1% by mass with respect to the total amount of materials used for the preparation of the raw material resin 47.

The polyamide resin 60 having been supplied to the cylinder 54 and the additive having been added according to need are kneaded by rotation of the screw 55. The kneading conditions may be, for example, such that the temperature of the cylinder 54 is 275°C to 325°C and the rotation speed of the screw 55 is 100 rpm to 500 rpm.

Next, a reinforcing fiber 63 as an example of the reinforcing filler of the present invention and a compound having a carbodiimide bond (hereinafter, simply referred to as "carbodiimide") 61 (when the second technique is adopted) are supplied to the cylinder 54 through the side feeder 57.

Examples of the reinforcing fiber 63 used include one kind or two or more kinds of glass fibers, carbon fibers, aramid fibers, etc. Of these, glass fibers and carbon fibers are preferable, and glass fibers are more preferable.

The Vickers hardness of the reinforcing fiber 63 may be 300 HV to 800 HV. The Vickers hardness when the reinforcing fiber 63 is a glass fiber may be preferably 500 HV to 800 HV. On the other hand, the Vickers hardness when the reinforcing fiber 63 is a carbon fiber may be preferably 300 HV to 500 HV. The Vickers hardness of the reinforcing fiber 63 can be, for example, such that the hardness of the reinforcing fiber 63 in a bulk state is measured in accordance with, for example, JIS Z 2244 (2009) and the obtained measurement value is adopted as the Vickers hardness HV of the reinforcing fiber 63. The Vickers hardness of the reinforcing fiber 63 may be obtained by, for example, measuring the nanoindentation hardness of the reinforcing fiber in a resin molded body by a nanoindenter (ISO14577 compliant) and converting the nanoindentation hardness into a Vickers hardness by using a mathematical formula described in ISO 14577 Annex F.

The reinforcing fiber 63 preferably has a diameter of ϕ6 µm to ϕ15 µm, and more preferably has a diameter of ϕ6 µm to ϕ8 µm. The contact area between the reinforcing fiber 63 and the polyamide resin 60 in the raw material resin 47 can be made relatively large by blending the reinforcing fiber 63 having a diameter in this range. Thus, the mechanical strength and rigidity of the sleeve 30 can be favorably improved when the worm wheel 21 is molded. That is, the mechanical strength, etc., of the sleeve 30 can be secured with a smaller amount of the reinforcing fiber 63, so that the amount of the reinforcing fiber 63, which is a factor in causing wear of the tooth portion 31, can be suppressed and the wear resistance can be improved. Further, the smaller the diameter of the reinforcing fiber 63, the lower the counterpart aggressiveness. Thus, the effect of causing wear and peeling of the resin is small. In this regard, too, the wear resistance can be improved. Moreover, by using the reinforcing fiber 63 having a small diameter, the aspect ratio of the fiber and the contact area with the resin can be increased. Thus, strength, rigidity, and toughness can be improved.

The blending ratio of the reinforcing fiber 63 may be, for example, 5% by mass to 40% by mass with respect to the total amount of materials used for the preparation of the raw material resin 47, and preferably 5% by mass to 20% by mass. By blending the reinforcing fiber 63 in this range, the creep resistance in a high temperature atmosphere can be improved. Further, an increase in the surface pressure generated in the resin can be suppressed and the occurrence of abnormal wear can be suppressed. Further, surface roughness can be suppressed to be relatively small, and a lubricating effect from grease can be fully realized.

The carbodiimide 61 used is not particularly limited as long as it is a compound having a carbodiimide group (-N=C=N-), and may be a monocarbodiimide having one carbodiimide group or may be a polycarbodiimide having a plurality of carbodiimide groups. Any kind of carbodiimide such as aliphatic carbodiimide, aromatic carbodiimide, modified carbodiimide, etc., can be used. Specific commercially available products include, for example, ones manufactured by LANXESS AG (each grade (P100, P, etc.) of aromatic carbodiimide "Stabaxol (registered trademark)"), ones manufactured by Nisshinbo Chemical Inc. (each grade (HMV-15CA, etc.) of aliphatic carbodiimide "CARBODILITE (registered trademark) "), ones manufactured by TEIJIN LIMITED (each grade of cyclic carbodiimide "TCC"), etc. Of these, aromatic carbodiimide is preferable. When the carbodiimide 61 is aromatic carbodiimide, the reaction rate is slow and the reaction can be carried out after the reinforcing fiber 63 is sufficiently kneaded.

The blending ratio of the carbodiimide 61 may be, for example, 0.5% by mass to 3.5% by mass with respect to the total amount of materials used for the preparation of the raw material resin 47. By blending the carbodiimide 61 in this range, the raw material resin 47 having a viscosity number VN of 180 ml/g or more can be satisfactorily obtained. On the other hand, since the amount of the carbodiimide 61 is not excessive, the risks of an increase in resin pressure (viscosity) during kneading, heat generation, thermal decomposition of the polyamide resin 60 and the carbodiimide 61 involved in the heat generation, etc., can be reduced. Accordingly, the raw material resin 47 can be obtained stably.

When the carbodiimide 61 is a powder, the carbodiimide 61 may be, for example, supplied alone from the main feeder 53 or the side feeder 57, or may be supplied after being mixed (dry blended or masterbatched) with the polyamide resin.

The reinforcing fiber 63 and the carbodiimide 61 are added to a kneaded material composed of the polyamide resin 60 and the additive having been added according to need and being transferred within the cylinder 54, and then further kneaded. The time from the supply of the carbodiimide 61 to the injection of the kneaded material from the nozzle 56 (the kneading time of the carbodiimide 61) may be, for example, 1 second to 1 minute. Therefore, the distance of the side feeder 57 from the nozzle 56 is only required to be set based on the kneading time.

After supplying the carbodiimide 61, the kneaded material is injected as a raw material resin 47 in the form of a strand from the nozzle 56, cooled and solidified in the cooling water tank 51, and then, pelletized by the pelletizer 52. Through the foregoing step, the raw material resin 47 composed of the polyamide resin 60 is obtained.

Regarding the manufacturing of the worm wheel 21, the next step is molding of the worm wheel 21.

In this step, a mold (not shown) is prepared in a molding machine 62 shown in FIG. 4, and the raw material resin 47 (pellets) having been obtained in the step of FIG. 3 is melted and injected into the mold. The mold may have a pattern for molding the disc-shaped worm wheel 21 before gear cutting. After the injection, the raw material resin 47 is cooled for a fixed period of time to be solidified, and then the molded worm wheel 21 is taken out of the mold.

Next, when the worm wheel 21 is subjected to heat treatment under reduced pressure or in an inert gas atmosphere, as shown in FIG. 4, the disc-shaped worm wheel 21 is set in an annealing device 24. The amount of oxygen in a tank of the annealing device 24 is reduced by depressurizing the inside of the tank or replacing it with an inert gas.

When the inside of the tank of the annealing device 24 is depressurized, the pressure after the depressurization may be, for example, 1 Pa or less (preferably, 1.0 × 10⁻³ Pa or more). Further, the depressurization can be performed by a publicly known vacuum pump 25 such as a rotary pump, for example. On the other hand, examples of the inert gas used for replacement with the air in the tank of the annealing device 24 include nitrogen, argon, etc.

After the depressurization or the replacement with the inert gas, the worm wheel 21 is heated within the annealing device 24. The heating temperature and the heating time have different preferable ranges depending on the shape and the size of the resin molded body to be heated (in this preferred embodiment, the disc-shaped worm wheel 21), and may be, for example, 200°C or more (preferably, 240°C or less) and 3 hours or more (preferably, 20 hours or less).

After the heating, the worm wheel 21 is taken out of the annealing device 24, and gear cutting (tooth formation) of the tooth portion 31 of the worm wheel 21 is performed to obtain the worm wheel 21 shown in FIG. 2.

As described above, according to the worm speed reducer 19 of this preferred embodiment, the viscosity number VN of the tooth portion 31 (resin portion) of the worm wheel 21 is 180 ml/g or more and the reinforcing fiber 63 contained in the tooth portion 31 has a hardness higher than that of the worm 20, which is a mating metal material. Thus, excellent wear resistance that has not been conventionally achieved can be exhibited. That is, the wear of the resin (tooth portion 31) containing the reinforcing fiber 63 having a relatively high hardness is suppressed, while the metal (worm 20) having a relatively low hardness is worn and metal abrasion powder is mixed into the grease. However, the hardness of the reinforcing fiber 63 is higher than that of the worm 20, so that the wear of the resin containing the reinforcing fiber 63 is suppressed. As a result, the life of the resin gear of the worm speed reducer 19 can be improved.

Accordingly, heat treatment after the gear cutting for reducing the wear can be omitted with respect to the worm 20. Thus, an increase in the number of steps can be prevented, and a dimensional change or a reduction in worm accuracy due to the heat treatment can be suppressed.

Hereinbefore, a preferred embodiment of the present invention has been described. However, the present invention can be implemented in another form.

For example, the worm wheel 21 has a configuration that the tooth portion 31 made of resin using the foregoing raw material resin 47 is in close contact with the sleeve 30 made of metal, etc., in the foregoing preferred embodiment. However, for example, the worm wheel 21 may include a sleeve 30 and a tooth portion 31 configured by integrally molding the foregoing raw material resin 47.

The worm speed reducer 19 is taken as an example of the sliding component of the present invention in the foregoing preferred embodiment. However, in addition to the worm speed reducer, the present invention can be applied to a variety of sliding components such as a metal guide rail for an automotive sliding door and a resin roller incorporated into the rail, metal balls and a rolling bearing including a resin cage for holding the balls, etc.

The carbodiimide 61 does not have to be supplied from the side feeder 57, and also does not have to be supplied during the kneading of the polyamide resin 60. For example, the carbodiimide 61 may be mixed with the polyamide resin 60 and supplied from the main feeder 53.

Furthermore, a filler may be contained in place of the reinforcing fiber 63 as an additive for reinforcing the raw material resin 47. Examples of the filler include a plate-shaped filler such as glass flakes, or a filler capable of finely reinforcing the resin such as a carbon nanotube and a carbon nanofiber.

In addition, various design changes can be made within the scope of matters described in the claims.

The present application corresponds to Japanese Patent Application No. 2018-078502 filed with the Japan Patent Office on April 16, 2018, and the entire disclosure of this application is incorporated herein by reference.

### Examples

Next, the present invention will be described based on Examples and Comparative Examples. However, the present invention should not be limited by the following Examples.

### <Examples 1 to 7 and Comparative Examples 1 to 4>

First, regarding the following Table 1, test Nos. (1) to (5) are Examples 1 to 5, respectively. Regarding Table 2, test Nos. (6) to (9) are Comparative Examples 1 to 4, respectively and test Nos. (10) and (11) are Examples 6 and 7, respectively.

Examples 1 to 7 and Comparative Examples 1 to 4 mainly show a tendency that the wear resistance of the resin can be improved when the viscosity number VN of the molded body is 180 ml/g or more (the hardness of the mating metal material is a fixed value).

### (A) Preparation of Raw Material Resin

In the kneader 48 having the configuration shown in FIG. 3, a resin, a reinforcing fiber, and an additive shown in Table 1 and Table 2 were kneaded at a blending ratio (% by mass) shown in Table 1 and Table 2 to obtain raw material resin pellets. The resin was fed into the main feeder 53 and the reinforcing fiber and the additive were fed into the side feeder 57. Prior to the preparation of the raw material resin, the Vickers hardness of the reinforcing fiber (glass fiber) to be used was obtained. More specifically, the nanoindentation hardness of the glass fiber was measured by a nanoindenter (ISO 14577 compliant, test force: 4000 µN, test force arrival time: 5 s, test force retention time: 2 s), and the nanoindentation hardness was converted into a Vickers hardness using a mathematical formula (Vickers hardness HV = 0.0945 × nanoindentation hardness (N/mm²)) described in ISO 14577 Annex F. The results are shown in Table 1 and Table 2.

### (B) Molding and Annealing Treatment

Ring pieces for thrust cylinder (Suzuki) type friction and wear tests (hereinafter, test pieces) were molded from the respective raw material resin pellets having been obtained in (A) by using a 100t electric injection molding machine (ROBOSHOT S-2000: 100B) manufactured by FANUC CORPORATION. For test Nos. (2) and (5), the test pieces were set in the annealing device 24. The inside of the tank of the annealing device 24 was then depressurized by the vacuum pump 25 to form a vacuum (1 PA or less), and the temperature inside the tank was set to 220°C, and the test pieces were heated for 10 hours.

In order to reproduce the tooth surface condition of the resin gear after gear cutting, the test pieces were cut about 3 mm from a side which becomes a sliding surface in the friction and wear test so that the reinforcing fibers were exposed on the sliding surfaces.

### <Evaluation Test>

### (A) Measurement of Viscosity Number of Molded Body

In accordance with ISO 307, each raw material resin of test Nos. (1) to (11) was dissolved in a solvent such as formic acid, sulfuric acid, cresol, etc., so that the concentration c becomes 0.005 g/ml, thereby obtaining a raw material resin solution. The relative viscosity ηᵣₑₗ was calculated from the kinematic viscosity ratio between the viscosity of the raw material resin solution and the viscosity of only the solvent (the ratio of fall time in a marked line tube in a micro Ubbelohde tube). After that, the viscosity number VN was calculated from the ratio between the concentration c and the relative viscosity ηᵣₑₗ. The results are shown in Table 1 and Table 2.

### (B) Friction and Wear Test

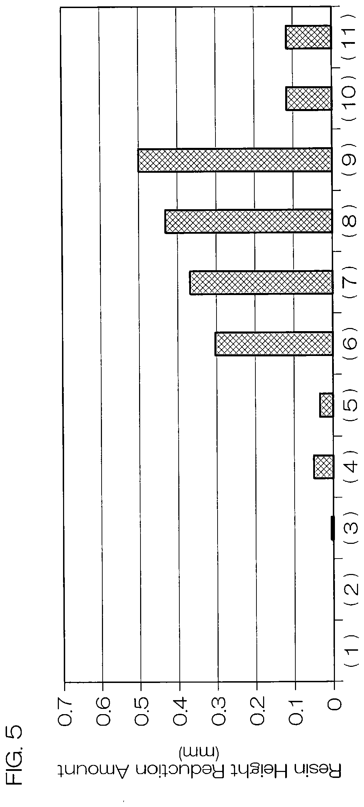

For test Nos. (1) to (11), a thrust cylinder (Suzuki) type friction and wear test was carried out using a metal roller made of SUJ2 having a Vickers hardness HV of 784 (with heat treatment (quenching and tempering)), and the amount of wear (amount of height reduction) of the resin before and after the test was measured. The results are shown in FIG. 5, Table 1, and Table 2. Similarly, a test using a metal roller made of S45C having a Vickers hardness HV of 311 (without heat treatment) was also carried out under the same conditions. The test conditions were as follows.
- Sliding by metal roller - resin ring
- Metal roller: made of SUJ2/S45C, ϕ3.5, 4-point contact roller (fixed)
- Vertical load: 220 N
- Sliding speed: 1 m/s
- Test temperature: room temperature (RT)
- Test time: 4 hours
- Grease lubrication (TOPAS NB52 manufactured by NOK KLÜBER CO., LTD.)
- Intermittent contact by drive-stop (10-second drive → 20-second stop)

First, it was found by a comparison between test Nos. (1) to (5), (10), and (11) as Examples and test Nos. (6) to (9) as Comparative Examples that high wear resistance can be exhibited when the viscosity number VN of the molded body is 180 ml/g or more. Further, it was found by a comparison between test Nos. (1) and (10) and between test Nos. (3) and (11) each differing in only the amount of the reinforcing fiber added that the added amount of the reinforcing fiber is preferably 20% by mass or less. That is, it is considered that when the added amount of the reinforcing fiber is increased, the elastic modulus of the resin becomes high accordingly, and the generated surface pressure is increased, and abnormal wear is likely to occur.

On the other hand, when test Nos. (8) and (9) are compared, test No. (8) has a smaller amount of height reduction of the resin despite having a larger added amount of the reinforcing fiber and exhibits high wear resistance as compared with test No. (9). It is considered that this is because test No. (8) uses the reinforcing fiber having a diameter ((ϕ6.5) smaller than test No. (9). That is, under the high surface pressure sliding, the reinforcing fiber having dropped due to the sliding may act like an abrasive as the wear mode of the resin containing the reinforcing fiber and cause fatigue and peeling of the resin itself. In this case, the counterpart aggressiveness can be mitigated if the reinforcing fiber having a smaller diameter is used, and thus, the amount of wear of the resin is considered to be reduced.

### (C) Relationship with Mating Metal Material

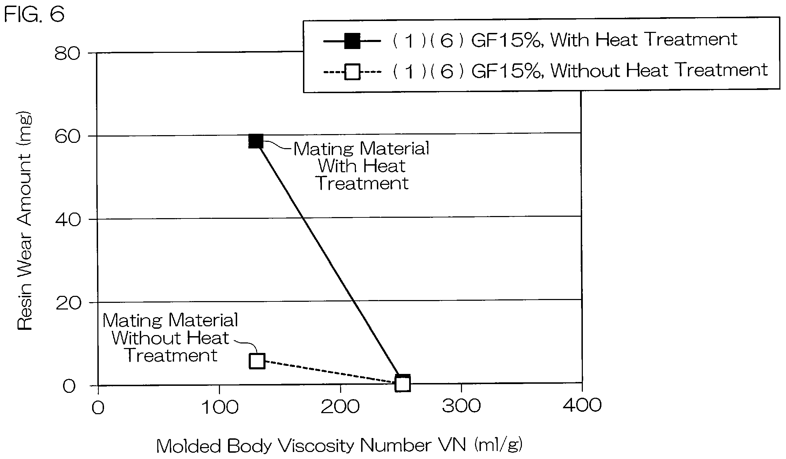

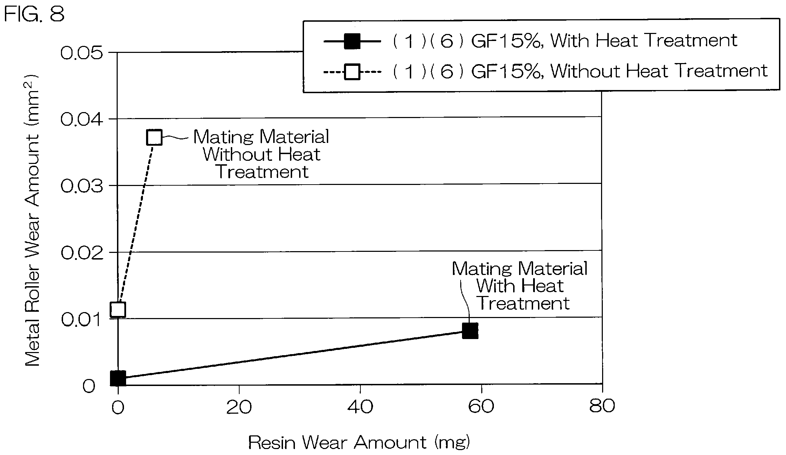

Next, it was evaluated how the amount of wear of the resin and the amount of wear of the metal changed depending on the hardness of the mating metal material (metal roller). More specifically, as described in the foregoing (B), the results of using the metal roller made of SUJ2 and having a Vickers hardness HV of 784 and the results of using the metal roller made of S45C and having a Vickers hardness HV of 311 were compared. The results are shown in FIG. 6 to FIG. 8. In the evaluation, test Nos. (1) and (6) were used as samples in which 15% by mass of glass fiber (GB) was added.

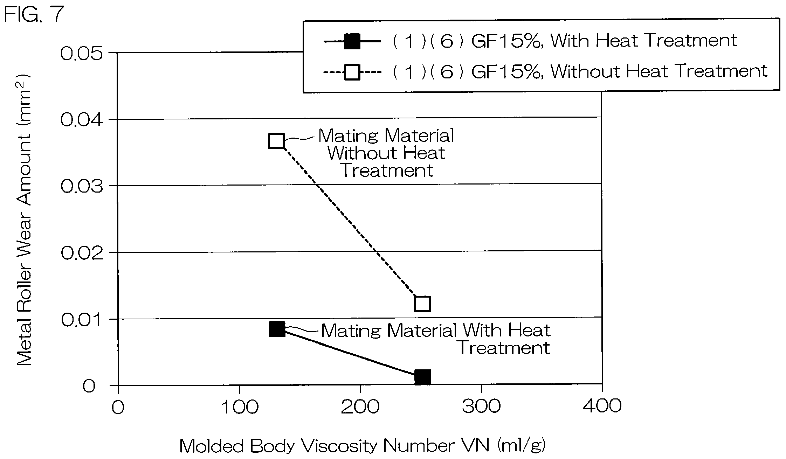

From the results of FIG. 6 to FIG. 8, it was found that the amount of wear of the resin can be reduced (FIG. 6) and the amount of wear of the mating metal material can also be reduced (FIG. 7) along with an increase in the viscosity number VN of the molded body. That is, it was confirmed that the amount of wear of the metal side can also be reduced by an improvement in the wear resistance of the resin. This is because the improvement in the wear resistance of the resin suppresses the dropping of the reinforcing fiber in the resin and the mixing of the grease, so that the abrasive wear in which the hard-reinforcing fiber acts like an abrasive and wears the resin and the metal is suppressed. It was confirmed that a metal abrasion amount at a level equivalent to that of the conventional combination of the fiber-reinforced resin and the mating metal material (with high hardening by heat treatment) can be obtained also in the combination of the fiber-reinforced resin and the non-heat treated mating metal material by the higher molecular weight of the resin (the increase in the viscosity number VN), and it was also confirmed that the wear resistance of the resin can be further improved.

### [Table 1]

**Table 1**

| | Test No. | (1) | (2) | (3) | (4) | (5) |
|---|---|---|---|---|---|---|
| Resin | Model Number | LEONA 1702 | LEONA 1702 | LEONA 1402S | LEONA 1502S | LEONA 1502S |
| | Manufacturer | Asahi Kasei | Asahi Kasei | Asahi Kasei | Asahi Kasei | Asahi Kasei |
| | Viscosity Number VN | 300 | 300 | 130 | 235 | 235 |
| | Blending Ratio | 85% | 85% | 83% | 85% | 85% |
| Reinfor cing Fiber | Type | GF | GF | GF | GF | GF |
| | Model Number | CS3DE-456S | CS3DE-456S | CS3DE-456S | CS3DE-456S | CS3DE-456S |
| | Fiber Diameter | ϕ6.5 | ϕ6.5 | ϕ6.5 | ϕ6.5 | ϕ6.5 |
| | Manufacturer | Nitto Boseki | Nitto Boseki | Nitto Boseki | Nitto Boseki | Nitto Boseki |
| | Hardness (HV) | 530 | 530 | 530 | 530 | 530 |
| | Added amount | 15% | 15% | 15% | 15% | 15% |
| Additiv e | Type | - | - | Aromatic CDI | - | - |
| | Model Number | - | - | Stabaxol P-100 | - | - |
| | Manufacturer | - | - | LANXESS | - | - |
| | Added amount | - | - | 2.0% | - | - |
| Mating Metal | Type | SUJ2 | SUJ2 | SUJ2 | SUJ2 | SUJ2 |
| | With or Without Heat Treatment | With | With | With | With | With |
| | Hardness (HV) | 784 | 784 | 784 | 784 | 784 |
| 200°C × 10h Vacuum Heat Treatment | | Without | With | Without | Without | With |
| Viscosity Number VN of Molded Body (ml/g) | | 234 | 356 | 230 | 190 | 301 |
| T/P Test Resin Height Reduction Amount (mm) | | 0 | 0 | 0.004 | 0.049 | 0.041 |

### [Table 2]

**Table 2**

| | Test No. | (6) | (7) | (8) | (9) | (10) | (11) |
|---|---|---|---|---|---|---|---|
| Resin | Model Number | LEONA 1402S | LEONA 1402S | LEONA 1402S | LEONA 1402S | LEONA 1702 | LEONA 1402S |
| | Manufacturer | Asahi Kasei | Asahi Kasei | Asahi Kasei | Asahi Kasei | Asahi Kasei | Asahi Kasei |
| | Viscosity Number VN | 130 | 130 | 130 | 130 | 300 | 130 |
| | Blending Ratio | 85% | 67% | 50% | 67% | 67% | 67% |
| Reinforcing Fiber | Type | GF | GF | GF | GF | GF | GF |
| | Model Number | CS3DE-456 S | CS3DE-456 S | CS3DE-456 S | CS3J-456S | CS3DE-456 S | CS3DE-456 S |
| | Fiber Diameter | ϕ6.5 | ϕ6.5 | ϕ6.5 | ϕ11 | ϕ6.5 | ϕ6.5 |
| | Manufacturer | Nitto Boseki | Nitto Boseki | Nitto Boseki | Nitto Boseki | Nitto Boseki | Nitto Boseki |
| | Hardness (HV) | 530 | 530 | 530 | 530 | 530 | 530 |
| | Added amount | 15% | 33% | 50% | 33% | 33% | 33% |
| Additive | Type | - | - | - | - | - | Aromatic CDI |
| | Model Number | - | - | - | - | - | Stabaxol P-100 |
| | Manufacturer | - | - | - | - | - | LANXESS |
| | Added amount | - | - | - | - | - | 2.0% |
| Mating Metal | Type | SUJ2 | SUJ2 | SUJ2 | SUJ2 | SUJ2 | SUJ2 |
| | With or Without Heat Treatment | With | With | With | With | With | With |
| | Hardness (HV) | 784 | 784 | 784 | 784 | 784 | 784 |
| 200°C × 10h Vacuum Heat Treatment | | Without | Without | Without | Without | Without | Without |
| Viscosity Number VN of Molded Body (ml/g) | | 130 | 130 | 130 | 130 | 230 | 230 |
| T/P Test Resin Height Reduction Amount (mm) | | 0.307 | 0.373 | 0.437 | 0.501 | 0.12 | 0.12 |

### <Examples 8 to 16 and Comparative Examples 5 to 9>

First, regarding the following Table 3 and Table 4, test Nos. (12) to (14), (18), (20) to (22), (24), and (25) are Examples 8 to 16, respectively, and test Nos. (15) to (17), (19), and (23) are Comparative Examples 5 to 9, respectively.

Examples 8 to 16 and Comparative Examples 5 to 9 mainly show a tendency that the wear resistance of the resin can be improved when the hardness of the mating metal is 250 HV to 600 HV and the hardness of the reinforcing fiber is greater than the hardness of the mating metal material. That is, although in the foregoing Examples 1 to 7 and Comparative Examples 1 to 4, it was evaluated how the amount of wear of the resin and the amount of wear of the metal changed depending on the increase or decrease in the viscosity number VN of the resin, in the following, it was evaluated how the magnitude relationship between the hardness of the reinforcing fiber and the hardness of the mating metal material affected the amount of wear of the resin and the amount of wear of the metal.

### (A) Preparation of Raw Material Resin

In the kneader 48 having the configuration shown in FIG. 3, a resin and a reinforcing fiber shown in Table 3 and Table 4 were kneaded at a blending ratio (% by mass) shown in Table 3 and Table 4 to obtain raw material resin pellets. The resin was fed into the main feeder 53 and the reinforcing fiber was fed into the side feeder 57. The viscosity number VN of the raw material resin was then measured in the same manner as the foregoing Examples 1 to 7 and Comparative Examples 1 to 4. Prior to the preparation of the raw material resin, the Vickers hardness of the reinforcing fiber (glass fiber) to be used was obtained. More specifically, the nanoindentation hardness of the glass fiber was measured by a nanoindenter (ISO 14577 compliant, test force: 4000 µN, test force arrival time: 5 s, test force retention time: 2 s), and the nanoindentation hardness was converted into a Vickers hardness using the mathematical formula (Vickers hardness HV = 0.0945 × nanoindentation hardness (N/mm²)) described in ISO 14577 Annex F. The results are shown in Table 3 and Table 4.

### (B) Molding and Annealing Treatment

Ring pieces for thrust cylinder (Suzuki) type friction and wear tests (hereinafter, test pieces) were molded from the respective raw material resin pellets having been obtained in (A) by using a 100t electric injection molding machine (ROBOSHOT S-2000: 100B) manufactured by FANUC CORPORATION.

In order to reproduce the tooth surface condition of the resin gear after gear cutting, the test pieces were cut about 3 mm from a side which becomes a sliding surface in the friction and wear test so that the reinforcing fibers were exposed on the sliding surfaces.

### (C) Preparation of Mating Metal Material (Metal Roller)

Metal rollers having been subjected to heat treatment (quenching and tempering) under the conditions shown in Table 3 were prepared as the mating metal materials. In the heat treatment conditions of Table 3, "O.Q." indicates that the metal roller after heating is cooled in oil (Oil Quenching) and "A.C." indicates that the metal roller after heating is cooled by air (Air Cooling) . The Vickers hardness of each of the obtained metal rollers was measured in accordance with JIS Z 2244 (2009) . The results are shown in Table 3. The mating metal materials shown in Table 4 were used as they were without heat treatment.

### <Evaluation Test>

### (A) Friction and Wear Test

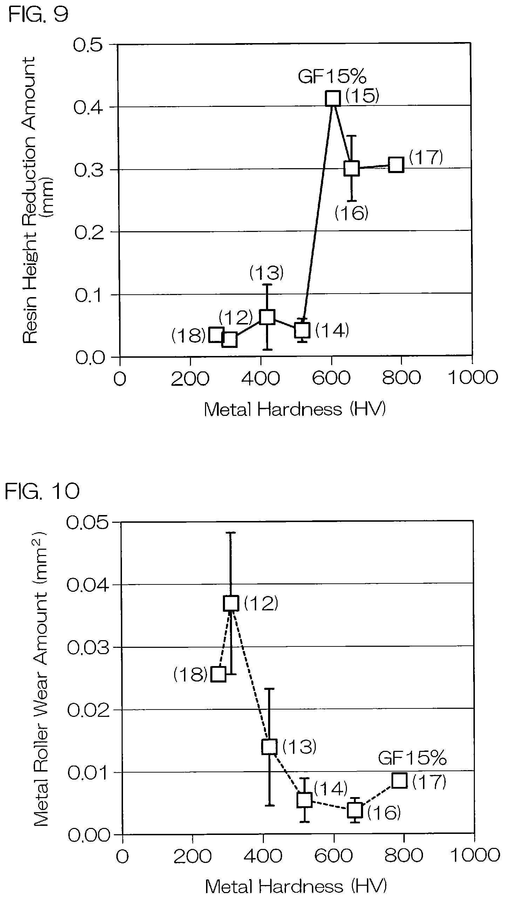

For test Nos. (12) to (25), a thrust cylinder (Suzuki) type friction and wear test was carried out using each metal roller, and the amount of wear (amount of height reduction) of the resin and the amount of wear of the metal before and after the test were measured. The results are shown in FIG. 9 to FIG. 10, Table 3, and Table 4. The test conditions were as follows.
- Sliding by metal roller - resin ring
- Metal roller: ϕ3.5, 4-point contact roller (fixed)
- Vertical load: 220 N (Test Nos. (12) to (18))
- Vertical load: 350 N (Test Nos. (19) to (25))
- Sliding speed: 1 m/s
- Test temperature: room temperature (RT)
- Test time: 4 hours
- Grease lubrication (Multemp JS-P manufactured by KYODO YUSHI CO., LTD.)
- Intermittent contact by drive-stop (10-second drive → 20-second stop)

### (B) Evaluation of Amount of Wear of Resin

As shown in FIG. 9, test Nos. (12) to (14) and (18) have a small amount of wear (amount of height reduction) of the resin and exhibit high wear resistance as compared with test Nos. (15) to (17). That is, as shown in Table 3, it was found that high wear resistance can be exhibited by the fact that the hardness of the mating metal material (metal roller) is 250 HV to 600 HV and, furthermore, the reinforcing fiber has a hardness higher than that of the mating metal material (metal roller).

Further, as shown in Table 4, test Nos. (20) to (22), (24), and (25) have a small amount of wear (amount of height reduction) of the resin and exhibit high wear resistance as compared with test Nos. (19) and (23). That is, it was found that high wear resistance can be exhibited even at a high load of the vertical load = 350N when the viscosity number VN of the molded body is 180 ml/g or more in addition to the conditions that the hardness of the mating metal material (metal roller) is 250 HV to 600 HV and the reinforcing fiber has a hardness higher than that of the mating metal material (metal roller).

### (C) Evaluation of Amount of Wear of Metal

On the other hand, it was found that when the viscosity number VN of the molded body is less than 180 ml/g and the hardness of the reinforcing fiber is 530 HV, the amount of wear of the resin can be reduced and the amount of wear of the mating metal material can also be reduced when the hardness of the mating metal material (metal roller) is 400 HV to 550 HV as in test Nos. (13) and (14) (see FIG. 10). It is considered that this is because the wear of the resin containing the reinforcing fiber having a relatively high hardness is suppressed while the metal having a relatively low hardness is worn and the metal abrasion powder is mixed into the grease, but the hardness of the reinforcing fiber is higher than that of the metal, so that the wear of the resin containing the reinforcing fiber is suppressed. However, if the purpose is not to reduce the amount of wear of the metal, the effect that the heat treatment of the mating metal material can be omitted and the manufacturing efficiency can be improved can be obtained as in test No. (12).

Further, as shown in Table 4, test Nos. (20) to (22), (24), and (25) have a small amount of wear (amount of height reduction) of the metal and exhibit high wear resistance as compared with test Nos. (19) and (23).

As described above, summarizing the results of test Nos. (1) to (11) and test Nos. (12) to (25), excellent wear resistance that has not been conventionally achieved can be exhibited by the fact that the viscosity number VN of the molded body is 180 ml/g or more and the reinforcing fiber contained in the molded body has a hardness higher than that of the mating metal material (in this example, the metal roller).

### [Table 3]

**Table 3**

| | Test No. | | (12) | (13) | (14) | (15) | (16) | (17) | (18) |
|---|---|---|---|---|---|---|---|---|---|
| Resin | Model Number | | LEONA 1402S | | | | | | |
| | Manufacturer | | Asahi Kasei | | | | | | |
| | Viscosity Number VN | | 130 | | | | | | |
| | Blending Ratio | | 85% | | | | | | |
| Reinfor cing Fiber | Type | | GF | | | | | | |
| | Model Number | | CS3DE-456S | | | | | | |
| | Fiber Diameter | | ϕ6.5 | | | | | | |
| | Manufacturer | | Nitto Boseki | | | | | | |
| | Hardness (HV) | | 530 | | | | | | |
| | Added amount | | 15% | | | | | | |
| Mating Metal | Type | | S45C | | | | | SUJ2 | S43C |
| | With or Without Heat Treatment | | Witho ut | With | With | With | With | With | With |
| | Heat Treatme nt Conditi ons | Quench ing | - | 890°C × 30min O.Q. | | | | 835°C × 10min O.Q. | 890°C × 30min O.Q. |
| | | Temper ing | | 412°C × 60min A.C. | 300°C × 60min A.C. | 185°C × 60min A.C. | 120°C × 60min A.C. | 180°C × 90min A.C. | 500°C × 60min A.C. |
| | Hardness (HV) | | 311 | 416 | 515 | 610 | 659 | 789 | 275 |
| Viscosity Number VN of Molded Body (ml/g) | | | 130 | | | | | | |
| T/P Test Resin Height Reduction Amount (mm) | | | 0.027 | 0.063 | 0.042 | 0.411 | 0.302 | 0.308 | 0.037 |
| T/P Test Metal Wear Amount (mm²) | | | 0.037 | 0.014 | 0.005 | - | 0.004 | 0.008 | 0.024 |

### [Table 4]

**Table 4**

| | Test No. | (19) | (20) | (21) | (22) | (23) | (24) | (25) |
|---|---|---|---|---|---|---|---|---|
| Resin | Model Number | LEONA 1402S | LEONA 1502S | LEONA 1702 | LEONA 1702 | LEONA 1402S | LEONA 1502S | LEONA 1702 |
| | Manufacturer | Asahi Kasei | Asahi Kasei | Asahi Kasei | Asahi Kasei | Asahi Kasei | Asahi Kasei | Asahi Kasei |
| | Viscosity Number VN | 130 | 235 | 300 | 300 | 130 | 235 | 300 |
| | Blending Ratio | 85% | | | | | | |
| Reinfor cing Fiber | Type | GF | | | | | | |
| | Model Number | CS3DE-456S | | | | | | |
| | Fiber Diameter | ϕ6.5 | | | | | | |
| | Manufacturer | Nitto Boseki | | | | | | |
| | Hardness (HV) | 530 | | | | | | |
| | Added amount | 15% | | | | | | |
| Mating Metal | Type | S45C | S45C | S45C | S45C | S43C | S43C | S43C |
| | With or Without Heat Treatment | Without | Without | Without | Without | Without | Without | Without |
| | Hardness (HV) | 311 | 311 | 311 | 311 | 275 | 275 | 275 |
| 200°C × 10h Vacuum Heat Treatment | | Without | Without | Without | With | Without | Without | Without |
| Viscosity Number VN of Molded Body (ml/g) | | 130 | 190 | 234 | 356 | 130 | 190 | 234 |
| T/P Test Resin Height Reduction Amount (mm) | | 0.457 | 0.054 | 0.023 | 0.033 | 0.457 | 0.100 | 0.032 |
| T/P Test Metal Wear Amount (mm²) | | 0.110 | 0.031 | 0.012 | 0.010 | 0.110 | 0.049 | 0.032 |

### <Example 17 and Comparative Examples 10 to 13>

In the following, a comparison between a molded product made of a non-reinforced resin to which no reinforcing fiber was added and a molded product made of a reinforced resin made of various reinforcing fibers was made. First, regarding the following Table 5, test No. (26) is Example 17 and test Nos. (27) to (30) are Comparative Examples 10 to 13, respectively.

Example 17 and Comparative Examples 10 to 13 mainly show that high temperature durability can be exhibited when the viscosity number VN of the molded body is 180 ml/g or more and the reinforcing fiber is a glass fiber and that they are suitable for a sliding component in which two modes of wear, rolling wear and sliding wear, occur and high toughness is required.

### (A) Preparation of Raw Material Resin

In the kneader 48 having the configuration shown in FIG. 3, a resin and a reinforcing fiber shown in Table 5 were kneaded at a blending ratio (% by mass) shown in Table 5 to obtain raw material resin pellets. The resin was fed into the main feeder 53 and the reinforcing fiber was fed into the side feeder 57. The viscosity number VN of the raw material resin was then measured in the same manner as the foregoing Examples 1 to 7 and Comparative Examples 1 to 4. The results are shown in Table 5. Prior to the preparation of the raw material resin, the Vickers hardness of the reinforcing fiber (glass fiber) to be used was obtained. More specifically, the nanoindentation hardness of the glass fiber was measured by a nanoindenter (ISO 14577 compliant, test force: 4000 µN, test force arrival time: 5 s, test force retention time: 2 s), and the nanoindentation hardness was converted into a Vickers hardness using the mathematical formula (Vickers hardness HV = 0.0945 × nanoindentation hardness (N/mm²)) described in ISO 14577 Annex F. The results are shown in Table 5.

### (B) Molding and Annealing Treatment

Ring pieces for thrust cylinder (Suzuki) type friction and wear tests (hereinafter, test pieces) were molded from the respective raw material resin pellets having been obtained in (A) by using a 100t electric injection molding machine (ROBOSHOT S-2000: 100B) manufactured by FANUC CORPORATION.

In order to reproduce the tooth surface condition of the resin gear after gear cutting, the test pieces were cut about 3 mm from a side which becomes a sliding surface in the friction and wear test so that the reinforcing fibers were exposed on the sliding surfaces.

### <Evaluation Test>

### (A) Friction and Wear Test

For test Nos. (26) to (29), a thrust cylinder (Suzuki) type friction and wear test was carried out using a metal roller having a Vickers hardness HV of 784 (with heat treatment (quenching and tempering)), and the amount of wear (amount of height reduction) of the resin before and after the test was measured. The results are shown in Table 5. The test conditions were as follows.
- Sliding by metal roller - resin ring
- Metal roller: made of SUJ2, ϕ8, 3-point contact roller (fixed)
- Vertical load: 300 N
- Sliding speed: 1 m/s
- Test temperature: 120°C
- Test time: 2 hours
- Grease lubrication (Multemp JS-P manufactured by KYODO YUSHI CO., LTD.)
- Intermittent contact by drive-stop (10-second drive → 20-second stop)

As shown in FIG. 5, test No. (26) has a small amount of wear (amount of height reduction) and creep deformability of the resin as compared with test Nos. (27) to (29) and exhibits high wear resistance and creep resistance. That is, it was found that test No. (26) is excellent in high temperature creep resistance because the amount of wear in a high temperature atmosphere as in the foregoing test temperature (120°C) is small.

### (B) Long-Term Durability Life Evaluation

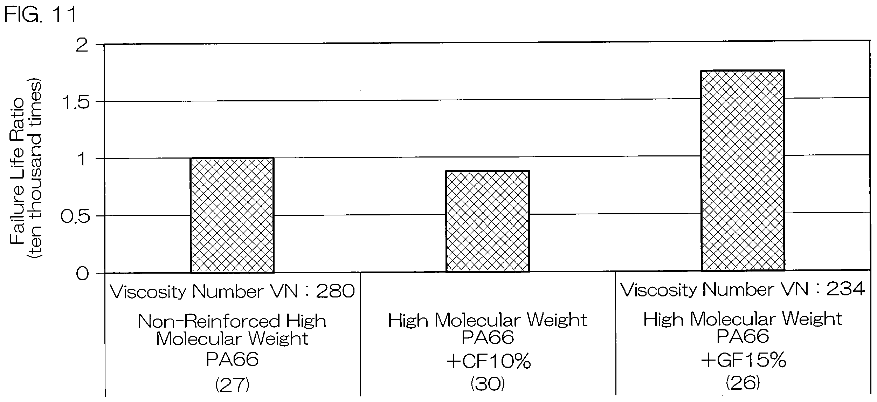

A resin worm wheel was made using the raw material resin of test Nos. (26), (27), and (30) having been obtained in the above. On the other hand, a worm shaft made of a SCM435 material, having a Vickers hardness HV of 300, and not subjected to heat treatment after tooth formation was prepared. The worm wheel and the worm shaft were assembled into a worm speed reducer assembly, and a predetermined torque was applied under conditions of a 90°C atmosphere and grease lubrication, and the number of cycles to failure was measured. The results are shown in FIG. 11.

From FIG. 11, it was found that the resin containing the glass fiber can obtain a good failure life as compared with the resin containing the carbon fiber when the resin and the mating metal material are used as gears engaged with each other .

### (C) Roller Type Test

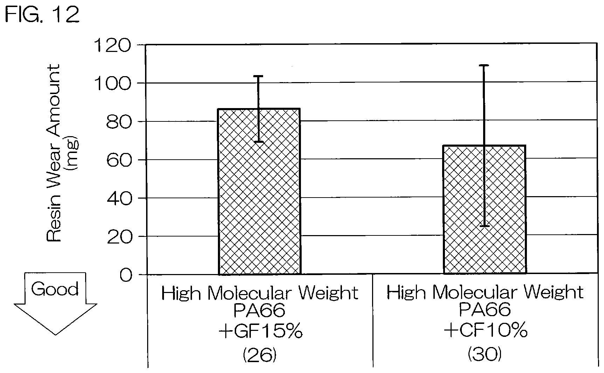

For the worm gears of test Nos. (26) and (30), a thrust cylinder (Suzuki) type friction and wear test was carried out using a metal roller, and the amount of wear (amount of height reduction) of the resin and the amount of wear of the metal before and after the test were measured. The results are shown in FIG. 12. The test conditions were as follows.
- Sliding by metal roller - resin ring
- Metal roller: made of SUJ2, ϕ3.5, 4- point contact roller (fixed)
- Vertical load: 300 N
- Sliding speed: 1 m/s
- Test temperature: 90°C
- Test time: 24 hours
- Grease lubrication (Multemp JS-P manufactured by KYODO YUSHI CO., LTD.)
- Intermittent contact by drive-stop (10-second drive → 20-second stop)

It was found from FIG. 12 that the resin of test No. (26) can obtain a good wear resistance even when the resin and the mating metal material were used as gears engaged with each other.

### (D) Tensile Elongation at Break and Tensile Energy to Break

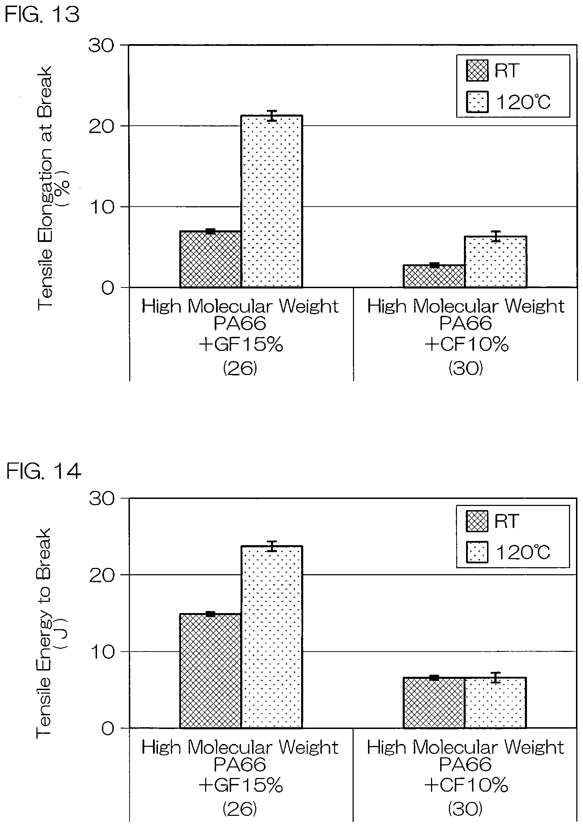

In order to compare the toughness between the raw material resin of test No. (26) and the raw material resin of test No. (30) having been obtained in the above, the tensile elongation at break and the tensile energy to break under room temperature and high temperature atmospheres were measured for these raw material resins in accordance with JIS K 7161. The results are shown in FIG. 13 to FIG. 14.

It was found from FIG. 13 to FIG. 14 that the raw material resin (resin containing the glass fiber) of test No. (26) can obtain a good toughness as compared with the raw material resin (resin containing the carbon fiber) of test No. (30). Thus, it is considered that the use of the glass fiber rather than the carbon fiber for, for example, sliding components (for example, engagement parts such as gears) in which two modes of wear, the rolling wear and the sliding wear, occur and high toughness is required, can obtain characteristics satisfying the purpose.

### [Table 5]

**Table 5**

| | Test No. | (26) | (27) | (28) | (29) | (30) |
|---|---|---|---|---|---|---|
| Resin | Model Number | LEONA 1702 | E51HSBNC01 0J | LEONA 1402S | LEONA 1402S | High Molecular Weight PA66 |
| | Manufacturer | Asahi Kasei | Dupont | Asahi Kasei | Asahi Kasei | - |
| | Viscosity Number VN | 300 | 290 | 130 | 130 | - |
| | Blending Ratio | 85% | 100% | 90% | 80% | 90% |
| Reinfor cing Fiber | Type | GF | - | AF | AF | CF |
| | Model Number | CS3DE-456S | - | Technora TR322U | Technora TR322U | - |
| | Fiber Diameter | ϕ6.5 | - | ϕ12 | ϕ12 | - |
| | Manufacturer | Nitto Boseki | - | Teijin | Teijin | - |
| | Hardness (HV) | 530 | - | - | - | - |
| | Added amount | 15% | - | 10% | 20% | 10% |
| Mating Metal | Type | SUJ2 | SUJ2 | SUJ2 | SUJ2 | - |
| | With or Without Heat Treatment | With | With | With | With | - |
| | Hardness (HV) | 784 | 784 | 784 | 784 | - |
| Viscosity Number VN of Molded Body (ml/g) | | 234 | 280 | 130 | 130 | - |
| T/P Test Resin Height Reduction Amount (mm) | | 0.027 | 0.083 | 0.090 | 0.072 | - |

### <Examples 18 to 21>

First, regarding the following Table 6, test Nos. (31) to (34) are Examples 18 to 21, respectively.

Examples 18 to 21 mainly show that the resin can exhibit high wear resistance with respect to sliding under high load when the viscosity number VN of the molded body is 180 ml/g or more and the hardness of the reinforcing fiber is greater than the hardness of the mating metal material.

### (A) Preparation of Raw Material Resin

In the kneader 48 having the configuration shown in FIG. 3, a resin and a reinforcing fiber shown in Table 6 were kneaded at a blending ratio (% by mass) shown in Table 6 to obtain raw material resin pellets. The resin was fed into the main feeder 53 and the reinforcing fiber was fed into the side feeder 57. The viscosity number VN of the raw material resin was then measured in the same manner as the foregoing Examples 1 to 7 and Comparative Examples 1 to 4. Prior to the preparation of the raw material resin, the Vickers hardness of the reinforcing fiber (glass fiber) to be used was obtained. More specifically, the nanoindentation hardness of the glass fiber was measured by a nanoindenter (ISO 14577 compliant, test force: 4000 µN, test force arrival time: 5 s, test force retention time: 2 s), and the nanoindentation hardness was converted into a Vickers hardness using the mathematical formula (Vickers hardness HV = 0.0945 × nanoindentation hardness (N/mm²)) described in ISO 14577 Annex F. The results are shown in Table 6.

### (B) Molding and Annealing Treatment

Ring pieces for thrust cylinder (Suzuki) type friction and wear tests (hereinafter, test pieces) were molded from the respective raw material resin pellets having been obtained in (A) by using a 100t electric injection molding machine (ROBOSHOT S-2000: 100B) manufactured by FANUC CORPORATION.

In order to reproduce the tooth surface condition of the resin gear after gear cutting, the test pieces were cut about 3 mm from a side which becomes a sliding surface in the friction and wear test so that the reinforcing fibers were exposed on the sliding surfaces.

### (C) Preparation of Mating Metal Material (Metal Roller)

Metal rollers having been subjected to heat treatment (quenching and tempering) under the conditions shown in test Nos. (32) to (34) of Table 6 were prepared as the mating metal materials. In the heat treatment conditions of test Nos. (32) to (34) of Table 6, "O.Q." indicates that the metal roller after heating is cooled in oil (Oil Quenching) and "A.C." indicates that the metal roller after heating is cooled by air (Air Cooling) . The Vickers hardness of each of the obtained metal rollers was measured in accordance with JIS Z 2244 (2009) . The results are shown in Table 6. The mating metal material shown in test No. (31) of Table 6 was used as it was without heat treatment.

### <Evaluation Test>

### (A) Friction and Wear Test

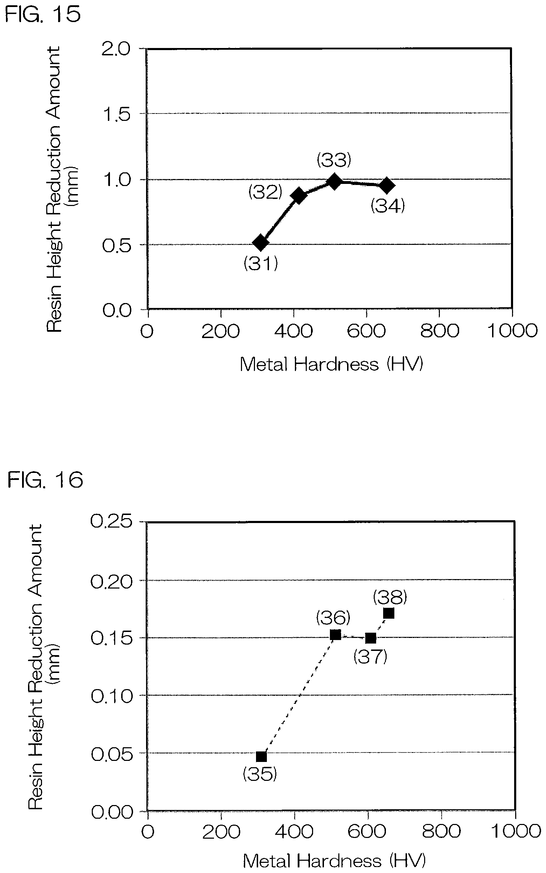

For test Nos. (31) to (34), a thrust cylinder (Suzuki) type friction and wear test was carried out using each metal roller, and the amount of wear (amount of height reduction) of the resin before and after the test was measured. The results are shown in FIG. 15 and Table 6. The test conditions were as follows.
- Sliding by metal roller - resin ring
- Metal roller: ϕ3.5, 4-point contact roller (fixed)
- Vertical load: 400 N
- Sliding speed: 1 m/s
- Test temperature: room temperature (RT)
- Test time: 4 hours
- Grease lubrication (Multemp JS-P manufactured by KYODO YUSHI CO., LTD.)
- Intermittent contact by drive-stop (10-second drive → 20-second stop)

### (B) Evaluation of Amount of Wear of Resin

As shown in FIG. 15 and Table 6, it was found that, in any of test Nos. (31) to (34), the amount of wear (amount of height reduction) of the resin is small and high wear resistance can be exhibited at a high load of the vertical load = 400 N. In particular, when the heat treatment of the mating metal material can also be omitted as in test No. (31), the effect that the manufacturing efficiency can be improved can be obtained. Further, it was also found from the results of test Nos. (31) and (32) that the hardness of the mating metal material (metal roller) is preferably in a range of 250 HV to 450 HV when the viscosity number VN of the molded body is 180 ml/g or more and the hardness of the reinforcing fiber is 530 HV. It is presumed that the reason why the amount of wear of the resin of test No. (33) increased was due to variations in the hardness of the mating metal material (metal roller) and the hardness of the glass fiber.

### [Table 6]

**Table 6**

| | Test No. | | (31) | (32) | (33) | (34) |
|---|---|---|---|---|---|---|
| Resin | Model Number | | LEONA 1702 | LEONA 1702 | LEONA 1702 | LEONA 1702 |
| | Manufacturer | | Asahi Kasei | Asahi Kasei | Asahi Kasei | Asahi Kasei |
| | Viscosity Number VN (ml/g) | | 300 | 300 | 300 | 300 |
| | Blending Ratio (%) | | 85% | | | |
| Reinfor cing Fiber | Type | | GF | | | |
| | Model Number | | CS3DE-456S | | | |
| | Fiber Diameter (µm) | | ϕ6.5 | | | |
| | Manufacturer | | Nitto Boseki | | | |
| | Hardness (HV) | | 530 | | | |
| | Added amount (%) | | 15% | | | |
| Mating Metal | Type | | S45C | S45C | S45C | S45C |
| | With or Without Heat Treatment | | Without | With | With | With |
| | Heat Treatme nt Conditi ons | Quench ing | - | 890°C × 30min O.Q. | | |
| | | Temper ing | - | 412°C × 60min A.C. | 300°C × 60min A.C. | 120°C × 60min A.C. |
| | Hardness (HV) | | 311 | 416 | 515 | 659 |
| 220°C × 10h Vacuum Heat Treatment | | | Without | Without | Without | Without |
| Viscosity Number VN of Molded Body (ml/g) | | | 234 | 234 | 234 | 234 |
| T/P Test Resin Height Reduction Amount (mm) | | | 0.50 | 0.87 | 0.98 | 0.94 |
| T/P Test Metal Wear Amount (mm²) | | | - | - | - | - |

### <Example 22 and Comparative Examples 14 to 16>

First, regarding the following Table 7, test No. (35) is Example 22 and test Nos. (36) to (38) are Comparative Examples 14 to 16.

Example 22 and Comparative Examples 14 to 16 mainly show a tendency that the wear resistance of the resin can be improved when the reinforcing fiber is a carbon fiber and the hardness of the reinforcing fiber (carbon fiber) is greater than that of the mating metal material.

### (A) Preparation of Raw Material Resin

In the kneader 48 having the configuration shown in FIG. 3, a resin and a reinforcing fiber shown in Table 7 were kneaded at a blending ratio (% by mass) shown in Table 7 to obtain raw material resin pellets. The resin was fed into the main feeder 53 and the reinforcing fiber was fed into the side feeder 57. The viscosity number VN of the raw material resin was then measured in the same manner as the foregoing Examples 1 to 7 and Comparative Examples 1 to 4. Prior to the preparation of the raw material resin, the Vickers hardness of the reinforcing fiber (carbon fiber) to be used was obtained. More specifically, the nanoindentation hardness of the carbon fiber was measured by a nanoindenter (ISO 14577 compliant, test force: 4000 µN, test force arrival time: 5 s, test force retention time: 2 s), and the nanoindentation hardness was converted into a Vickers hardness using the mathematical formula (Vickers hardness HV = 0.0945 × nanoindentation hardness (N/mm²)) described in ISO 14577 Annex F. The results are shown in Table 7.

### (B) Molding and Annealing Treatment

Ring pieces for thrust cylinder (Suzuki) type friction and wear tests (hereinafter, test pieces) were molded from the respective raw material resin pellets having been obtained in (A) by using a 100t electric injection molding machine (ROBOSHOT S-2000: 100B) manufactured by FANUC CORPORATION.

In order to reproduce the tooth surface condition of the resin gear after gear cutting, the test pieces were cut about 3 mm from a side which becomes a sliding surface in the friction and wear test so that the reinforcing fibers were exposed on the sliding surfaces.

### (C) Preparation of Mating Metal Material (Metal Roller)

Metal rollers having been subjected to heat treatment (quenching and tempering) under the conditions shown in test Nos. (36) to (38) of Table 7 were prepared as the mating metal materials. In the heat treatment conditions of test Nos. (36) to (38) of Table 7, "O.Q." indicates that the metal roller after heating is cooled in oil (Oil Quenching) and "A.C." indicates that the metal roller after heating is cooled by air (Air Cooling) . The Vickers hardness of each of the obtained metal rollers was measured in accordance with JIS Z 2244 (2009) . The results are shown in Table 7. The mating metal material shown in test No. (35) of Table 7 was used as it was without heat treatment.

### <Evaluation Test>

### (A) Friction and Wear Test

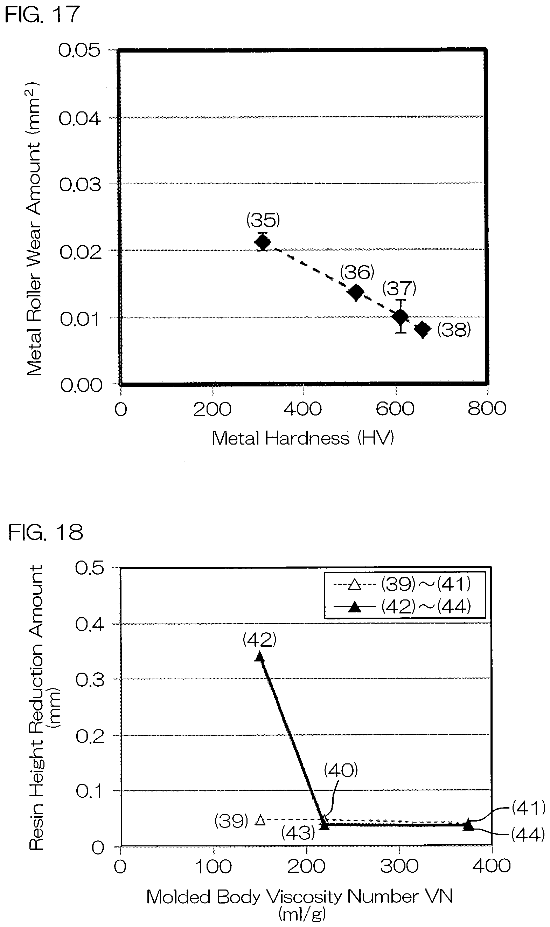

For test Nos. (35) to (38), a thrust cylinder (Suzuki) type friction and wear test was carried out using each metal roller, and the amount of wear (amount of height reduction) of the resin and the amount of wear of the metal before and after the test were measured. The results are shown in FIG. 16, FIG. 17, and Table 7. The test conditions were as follows.
- Sliding by metal roller - resin ring
- Metal roller: ϕ3.5, 4-point contact roller (fixed)
- Vertical load: 220 N
- Sliding speed: 1 m/s
- Test temperature: room temperature (RT)
- Test time: 4 hours
- Grease lubrication (Multemp JS-P manufactured by KYODO YUSHI CO., LTD.)
- Intermittent contact by drive-stop (10-second drive → 20-second stop)

### (B) Evaluation of Amount of Wear of Resin

As shown in FIG. 16 and Table 7, test No. (35) has a small amount of wear (amount of height reduction) of the resin and exhibits high wear resistance as compared with test Nos. (36) to (38). That is, as shown in Table 7, it was found that high wear resistance can be exhibited by the fact that the reinforcing fiber has a hardness higher than that of the mating metal material (metal roller) when the reinforcing fiber is a carbon fiber and the viscosity number of the molded body is constant at 150 (ml/g).

### (C) Evaluation of Amount of Wear of Metal

On the other hand, as shown in FIG. 17 and Table 7, it was found that the amount of wear of the mating metal material can also be reduced as the hardness of the mating metal material becomes great. That is, it can be said in the examples of Table 7 that although the amount of wear of the mating metal material of test No. (35) is the largest, even the metal abrasion amount of test No. (35) is at a level that poses no problem at all in practical use. On the other hand, if the purpose is not to reduce the amount of wear of the metal, the effect that the heat treatment of the mating metal material can be omitted and the manufacturing efficiency can be improved can be obtained as in test No. (35).

### [Table 7]

**Table 7**

| | Test No. | | (35) | (36) | (37) | (38) |
|---|---|---|---|---|---|---|
| Resin | Model Number | | 3101T-10V | 3101T-10V | 3101T-10V | 3101T-10V |
| | Manufacturer | | TORAY | TORAY | TORAY | TORAY |
| | Viscosity Number VN (ml/g) | | - | - | - | - |
| | Blending Ratio (%) | | 90% | | | |
| Reinfor cing Fiber | Type | | CF | | | |
| | Model Number | | - | | | |
| | Fiber Diameter (µm) | | - | | | |
| | Manufacturer | | TORAY | | | |
| | Hardness (HV) | | 354 | | | |
| | Added amount (%) | | 10% | | | |
| Mating Metal | Type | | S45C | S45C | S45C | S45C |
| | With or Without Heat Treatment | | Without | With | With | With |
| | Heat Treatme nt Conditi ons | Quench ing | - | 890°C × 30min O.Q. | | |
| | | Temper ing | - | 300°C × 60min A.C. | 185°C × 60min A.C. | 120°C × 60min A.C. |
| | Hardness (HV) | | 311 | 515 | 610 | 659 |
| 220°C × 10h Vacuum Heat Treatment | | | Without | Without | Without | Without |
| Viscosity Number VN of Molded Body (ml/g) | | | 150 | 150 | 150 | 150 |
| T/P Test Resin Height Reduction Amount (mm) | | | 0.05 | 0.15 | 0.15 | 0.17 |
| T/P Test Metal Wear Amount (mm²) | | | 0.021 | 0.014 | 0.010 | 0.008 |

### <Examples 23 to 27 and Comparative Example 17>

First, regarding the following Table 8, test Nos. (39) to (41) and (43) to (44) are Examples 23 to 25 and 26 to 27, respectively, and test No. (42) is Comparative Example 17.

Examples 23 to 27 and Comparative Example 17 mainly show a tendency that the wear resistance of the resin can be improved when the reinforcing fiber is a carbon fiber and the viscosity number VN of the molded body is 180 ml/g or more. That is, although in the foregoing Example 22 and Comparative Examples 14 to 16, it was evaluated how the amount of wear of the resin and the amount of wear of the metal changed depending on the increase or decrease in the hardness of the mating metal material, in the following, it was evaluated how the increase or decrease in the viscosity number of the molded body (with the hardness of the mating metal material being fixed) affected the amount of wear of the resin.

### (A) Preparation of Raw Material Resin

In the kneader 48 having the configuration shown in FIG. 3, a resin and a reinforcing fiber shown in Table 8 were kneaded at a blending ratio (% by mass) shown in Table 8 to obtain raw material resin pellets. The resin was fed into the main feeder 53 and the reinforcing fiber was fed into the side feeder 57. The viscosity number VN of the raw material resin was then measured in the same manner as the foregoing Examples 1 to 7 and Comparative Examples 1 to 4. Prior to the preparation of the raw material resin, the Vickers hardness of the reinforcing fiber (carbon fiber) to be used was obtained. More specifically, the nanoindentation hardness of the carbon fiber was measured by a nanoindenter (ISO 14577 compliant), and the nanoindentation hardness was converted into a Vickers hardness using the mathematical formula (Vickers hardness HV = 0.0945 × nanoindentation hardness (N/mm²)) described in ISO 14577 Annex F. The results are shown in Table 8.

### (B) Molding and Annealing Treatment

Ring pieces for thrust cylinder (Suzuki) type friction and wear tests (hereinafter, test pieces) were molded from the respective raw material resin pellets having been obtained in (A) by using a 100t electric injection molding machine (ROBOSHOT S-2000: 100B) manufactured by FANUC CORPORATION.

In order to reproduce the tooth surface condition of the resin gear after gear cutting, the test pieces were cut about 3 mm from a side which becomes a sliding surface in the friction and wear test so that the reinforcing fibers were exposed on the sliding surfaces.

### (C) Preparation of Mating Metal Material (Metal Roller)

Metal rollers having been subjected to heat treatment (quenching and tempering) under the conditions shown in test Nos. (42) to (44) of Table 8 were prepared as the mating metal materials. In the heat treatment conditions of test Nos. (42) to (44) of Table 8, "O.Q." indicates that the metal roller after heating is cooled in oil (Oil Quenching) and "A.C." indicates that the metal roller after heating is cooled by air (Air Cooling) . The Vickers hardness of each of the obtained metal rollers was measured in accordance with JIS Z 2244 (2009) . The results are shown in Table 8. The mating metal materials shown in test Nos. (39) to (41) of Table 8 were used as they were without heat treatment.

### <Evaluation Test>

### (A) Friction and Wear Test

For test Nos. (39) to (44), a thrust cylinder (Suzuki) type friction and wear test was carried out using each metal roller, and the amount of wear (amount of height reduction) of the resin and the amount of wear of the metal before and after the test were measured. The results are shown in FIG. 18 and Table 8. The test conditions were as follows.
- Sliding by metal roller - resin ring
- Metal roller: ϕ3.5, 4-point contact roller (fixed)
- Vertical load: 220 N
- Sliding speed: 1 m/s
- Test temperature: room temperature (RT)
- Test time: 4 hours
- Grease lubrication (Multemp JS-P manufactured by KYODO YUSHI CO., LTD.)
- Intermittent contact by drive-stop (10-second drive → 20-second stop)

### (B) Evaluation of Amount of Wear of Resin

As shown in FIG. 18 and Table 8, test Nos. (39) to (41) and (43) to (44) have a small amount of wear (amount of height reduction) of the resin and exhibit high wear resistance as compared with test No. (42). That is, as shown in FIG. 18 and Table 8, it was found that high wear resistance can be exhibited by the fact that the viscosity number VN of the molded body is 180 ml/g or more when the reinforcing fiber is a carbon fiber and the Vickers hardness of the mating metal material is constant at 311 HV or 789 HV. It is considered that test No. (39) can exhibit high wear resistance by the fact that the sliding condition is a relatively low load of vertical load = 220 N and the reinforcing fiber has a hardness higher than that of the mating metal material (metal roller) although the viscosity number VN of the molded body is 150 ml/g, which is less than 180 ml/g.

As described above, summarizing the results of test Nos. (35) to (38) of Table 7 and test Nos. (39) to (44) of Table 8, excellent wear resistance that has not been conventionally achieved can be exhibited by the fact that even when the reinforcing fiber is a carbon fiber, the viscosity number VN of the molded body is 180 ml/g or more and the carbon fiber contained in the molded body has a hardness higher than that of the mating metal material (in this example, the metal roller) .

### [Table 8]

**Table 8**

| | Test No. | | (39) | (40) | (41) | (42) | (43) | (44) |
|---|---|---|---|---|---|---|---|---|
| Resin | Model Number | | 3101T-10 V | - | - | 3101T-10V | - | - |
| | Manufacturer | | TORAY | TORAY | TORAY | TORAY | TORAY | TORAY |
| | Viscosity Number VN (ml/g) | | - | - | - | - | - | - |
| | Blending Ratio (%) | | 90% | | | | | |
| Reinfor cing Fiber | Type | | CF | | | | | |
| | Model Number | | - | | | | | |
| | Fiber Diameter (µm) | | - | | | | | |
| | Manufacturer | | TORAY | | | | | |
| | Hardness (HV) | | 354 | | | | | |
| | Added amount (%) | | 10% | | | | | |
| Mating Metal | Type | | S45C | S45C | S45C | SUJ2 | SUJ2 | SUJ2 |
| | With or Without Heat Treatment | | Without | Without | Without | With | With | With |
| | Heat Treatme nt Conditi ons | Quench ing | - | - | - | 835°C × 10min O.Q. | 835°C × 10min O.Q. | 835°C × 10min O.Q. |
| | | Temper ing | - | - | - | 180°C × 90min A.C. | 180°C × 90min A.C. | 180°C × 90min A.C. |
| | Hardness (HV) | | 311 | 311 | 311 | 789 | 789 | 789 |
| 220°C × 10h Vacuum Heat Treatment | | | Without | Without | With | Without | Without | With |
| Viscosity Number VN of Molded Body (ml/g) | | | 150 | 200 | 374 | 150 | 200 | 374 |
| T/P Test Resin Height Reduction Amount (mm) | | | 0.047 | 0.048 | 0.040 | 0.342 | 0.038 | 0.036 |
| T/P Test Metal Wear Amount (mm²) | | | 0.021 | 0.012 | 0.010 | 0.010 | 0.001 | 0.003 |

### Reference Signs List

19 ··· Worm Speed Reducer, 20 ··· Worm, 21 ··· Worm Wheel, 31 ··· Tooth Portion, 47 ··· Raw Material Resin, 63 ··· Reinforcing Fiber

## Claims

1. A sliding component comprising:
a first sliding member having a resin portion on its outer surface; and
a second sliding member having a metal portion that slides relative to the resin portion; wherein
the resin portion of the first sliding member includes a resin containing a reinforcing filler and having a viscosity number VN of 180 ml/g or more, and
the reinforcing filler has a hardness higher than that of the metal portion of the second sliding member.

2. The sliding component according to claim 1, wherein the reinforcing filler has a Vickers hardness of 300 HV to 800 HV, and the metal portion has a Vickers hardness of 250 HV to 600 HV.

3. The sliding component according to claim 1 or claim 2, wherein the resin portion of the first sliding member has a viscosity number VN of 230 ml/g to 400 ml/g.

4. The sliding component according to any one of claims 1 to 3, wherein the resin portion of the first sliding member and the metal portion of the second sliding member include gears engaged with each other.

5. The sliding component according to claim 4, wherein
the first sliding member includes a worm wheel having the resin portion in which a tooth portion is formed, and
the second sliding member includes a worm engaged with the tooth portion of the worm wheel.

6. The sliding component according to any one of claims 1 to 5, wherein the reinforcing filler includes a reinforcing fiber.

7. The sliding component according to claim 6, wherein the reinforcing fiber is a glass fiber.

8. The sliding component according to claim 6, wherein the reinforcing fiber is a carbon fiber.
